Europäisches Patentamt

(19) European Patent Office

Office européen des brevets

(11) Publication number: **0 137 536**
**A1**

## (12) EUROPEAN PATENT APPLICATION

(21) Application number: 84201247.8

(22) Date of filing: 28.08.84

(51) Int. Cl.⁴: **A 23 L 1/23**
A 23 C 19/032, A 23 C 19/06
A 23 C 19/068

(30) Priority: 29.08.83 US 527588

(43) Date of publication of application:
17.04.85 Bulletin 85/16

(84) Designated Contracting States:
CH DE FR GB LI NL SE

(71) Applicant: STAUFFER CHEMICAL COMPANY

Westport Connecticut 06880(US)

(72) Inventor: Boudreaux, Donald Peter
2818 Flannery Road
San Pablo California 94806(US)

(74) Representative: Urbanus, Henricus Maria, Ir. et al,
c/o Vereenigde Octrooibureaux Nieuwe Parklaan 107
NL-2587 BP 's-Gravenhage(NL)

(54) Cheese-flavored substance.

(57) A method for producing a cheese flavored substance by fermentation of a flavor development medium with a source of lipase/protease and a lactic acid-producing strain of microorganism, the cheese flavored substance produced by the method, and foods containing the cheese flavored substance are claimed. In a preferred embodiment, the source of lipase/protease is *Candida lipolytica*. The flavor development medium may contain no milk fat, or milk fat in a concentration ranging up to 50% (weight/volume %) of the flavor development medium.

EP 0 137 536 A1

CHEESE-FLAVORED SUBSTANCE

## Field of the Invention

The invention relates to a method for making a substance having a cheese-like flavor utilizing a source of lipase, protease or both, at least one strain of lactic acid-producing bacteria and a medium having from about 0.3% to about 12% protein and from about less than 2% to about 85% fat. The medium is fermented for a period of time under anerobic conditions until a pH between 4.5 and 5.5 is reached, at which time a substance having a cheese-like flavor develops and the lipase or protease or lipase and protease are inactivated. A relatively low solids cheese-flavored substance is produced. The low solids cheese flavor may be concentrated to 95% solids in dry powdered form or concentrated into a paste form in a range of between 40 and 75% solids.

## Background of the Invention

The production of cheese by traditional methods is a time-consuming process. The starting material for such traditional cheeses invariably is whole milk or whole milk that has either been augmented with milk fat or treated to separate high milk fat-containing fractions which are used for the production of cheese from relatively lower milk fat-containing fractions. The production of cheese having good flavor by such traditional methods is a complex process that is not well understood. What is understood, however, is that the flavors that give the various cheese their distinctive charactertistics are gradually produced during ripening times which may vary from 2-3 months to well over one year at controlled temperatures. Because of the long and exacting storage conditions for the ripening process such traditionally produced cheeses are an expensive delicacy for a small segment of the cheese-consuming population.

An alternative approach to the production of cheeses having a distinctive and pleasing flavor is to obtain a cheese flavored substance, via various processes, having a distinctive cheese flavor and to add this cheese flavored substance to a relatively young cheese, i.e., one that has not been subjected to a long aging process, or to a cheese that has not developed a distinctive flavor. Such cheese-flavored substances, of course, have a more general application in the food industry. They may be used to impart a cheese flavor to a variety of foods, including: processed cheeses, which include natural cheese, color, salt and emulsifiers; processed cheese foods which include, in addition to the ingredients of processed cheese, certain optional ingredients such as skim milk, whey, milk cream, albumim and skim milk cheese; or processed cheese spreads which include, in addition to the ingredients in processed cheese food, gums and the like for water retention. Cheese-flavored substances furthermore may be used to impart a distinctive cheese flavor to imitation cheese. Moreover, such distinctive cheese flavors can be used in a number of non-cheese type foods. For example, they can be used in baked goods such as cheese-flavored crackers, chips, breads, cakes, and the like.

In general, cheese-flavored substances may be produced by one of two methods. In the first method, a traditionally produced unripened cheese having no distinctive flavor is subjected to enzymatic digestion. The digest is combined with various ingredients and added to the food product to be produced. Although it is possible to produce relatively large amounts of cheese-flavored substances by this general process, it has the distinct disadvantage of a relatively expensive starting material.

A second approach to producing cheese flavor is to employ fermentative techniques. Cheese-flavored substances produced by processes of this type have almost always used substrates having relatively high milk fat concentrations -- on the order of between 30% and 80% on a solids basis. Usually, such high milk fat substances take the form of cream or butter. In general, these processes all utilize substrates having relatively low protein concentrations, usually not exceeding 3% on a weight/ volume basis. Although it is possible, using these conventional fermentation processes, to produce substances having distinct cheese tastes in a relatively short period of time -- on the order of 2-5 days -- these conventional techniques have the distinct disadvantage of requiring relatively expensive starting materials as substrates. Moreover, these starting materials are subject to spoilage in short periods of time if not stored under proper conditions, usually requiring refrigeration. Thus, the

substrates used in conventional techniques entail considerable expense in acquisition and storage.

## Summary of the Invention

The process for producing the cheese-flavored substance according to the instant invention may be briefly described as a mixed culture fermentation of a flavor development medium. The components of the mixed culture fermentation are a source of lipase or protease or lipase and protease (herein referred to as lipase/protease), and at least one lactic acid-producing microorganism and a flavor development medium. It is preferred that the source of lipase/protease is a lipase/protease-producing microorganism. The lipase/protease-producing miroorganism(s) may be produced in two stages. In the first stage of the two stages, the inoculum development stage, the lipase/protease-producing organism(s) is grown for a period of time in aerobic conditions in a complete inoculum development medium. In the second of the two stages an aliquot of the inoculum development medium containing the lipase/protease-producing organism(s) is placed in a first starter development medium and is cultured under aerobic conditions for a period of time.

At the same time, at least one lactic acid-producing microorganism is grown anaerobically in a second starter development medium for a period of time. After the first starter development medium containing the lipase/protease-producing microorganism and the second starter development medium containing at least one lactic acid-producing microorganism have both reached a predetermined stage of growth, aliquots of each of the starter development media containing the respective microorganisms are inoculated into the flavor development medium. The flavor development medium is fermented by the mixed culture of microorganisms for a period of time until a cheese flavor develops at which time the lipase/protease and lactic acid-producing microorganism are inactivated. The process is described in further detail hereinbelow.

The process according to the subject invention is a mixed fermentation of a flavor development medium utilizing a source of lipase/protease and at least one lactic acid-producing microorganism. The sources of lipase and protease may be any purified or partially purified

4

preparations of lipase and protease. Such purified and partially purfied sources of enzyme are readily available commercially. Alternatively, the process according to the invention is a mixed fermentation of a flavor development medium by at least one lactic acid-producing microorganism and, as the source of lipase/protease, a lipase/protease-producing microorganism. The term "lipase/protease-producing microorganism" as used herein is intended to include: any lipase-producing microorganism, preferably any extracellular lipase-producing microorganism; any protease-producing microorganism, preferably any extracellular protease-producing microorganism; a combination of lipase-producing microorganism and protease-producing microorganism; or any lipase- and protease-producing microorganism. The choice of lipase/protease-producing microorganism will depend upon the contents of the flavor development medium.

The process according to the invention also encompasses a mixed fermentation of a flavor development medium in which the source of lipase/protease is a purified or partially purified preparation of lipase/protease and a lipase/protease-producing microorganism. Thus, within the scope of the invention are fermentations of a flavor development medium in which the source of lipase/protease may be a purified or partially purified protease and a lipase-producing microorganism, a purified or partially purified lipase and a protease-producing microroganism; or a lipase- and protease-producing microorganism supplemented with a purified or partially purified lipase or protease or both.

Preferably the lipase/protease-producing microorganism will be nonpathogenic, and particularly nonpathogenic to man. In particular, microorganisms such as — Penicillum (especially Pennicillum roqueforti), Oidum lactis, Cladisporum (especially Cladisporum butaryi), Micrococcus and Candida (especially Candida lipolytica) are suitable microorganisms. Preferred in the process according to the present invention is Candida lipolytica and in particular, Candida lipolytica deposited in the American Type Culture Collection, Rockville, Maryland USA under the assession numbers ATCC 8661, ATCC 20320 and ATCC 20324. Especially preferred is Candida lypolytica ATCC 20324.

As mentioned above, at least one lactic acid producing microorganism is used in the fermentation or mixed fermentation process according to the invention. Lactic acid producing microorganisms suitable for this purpose are desirably dairy strains of lactic acid producing organisms. Dairy strains of lactic acid producing microorganisms include the genuses Streptococcus (S.), Lactobacillus (L.), Leuconostoc (Le.), Micrococcus (M.), Citrobacter (C.) and Brevibacterium (B.). Within the genus Streptococcus, S. cremoris, S. lactis, S. thermophilous and S. diacetilactis are examples. Within the genus Lactobacillus, L. casei, L. bulgaricus, L. acidophilous, L. delbrueckii, and L. helveticus are examples. Within the genus Leuconostoc, Le. cremoris, Le. dextranicum and Le. citrovorum are examples. Within the genus Micrococcus, M. caselytics, M. conglomeratus and M. freudenreichii are examples. Within the genus Citrobacter, C. intermedii and C. freudii are examples. Within the genus Brevibacterium, B. linens is an example.

It is preferred in the process according to the invention, to use two lactic acid-producing microorganisms, and although any two of the above-listed lactic acid-producing microorganisms are usable, S. lactis and L. casei are preferred. Particularly preferred for the S. lactis is S. lactis strain $C_2$ kindly furnished by W.E. Sandine of Oregon State University at Corvallis, Oregon. Also preferred is L. casei. TA101 ATCC 39392.

The lipase/protease-producing microorganism(s) and lactic acid-producing microorganisms used in the mixed fermentation according to the invention are separately developed for subsequent inoculation into the flavor development medium. The lipase/protease-producing microorganism(s) is developed for inoculation in two stages, both of which are carried out under aerobic conditions. In the first of the two stages, the lipase/protease-producing microorganism(s) is inoculated into an inoculum development medium which is a complete medium suitable for growth of the lipase/protease-producing microorganism(s). Preferably, the complete medium will contain all the substances necessary for vigorous and sustained growth of the lipase/ protease-producing microorganism(s). In general, such a medium will be a standard bacterial culture medium supplemented with yeast extract (Y). Examples of such media include but are not limited to Nutrient Broth (produced by Difco), Yeast Morphology Broth (Difco), Peptone (Difco), and Tryptocase Soy Broth (TSB) (Bethesda Biological Laboratories, hereinafter BBL). Yeast extract is available from Difco and Stauffer Chemical Company (hereinafter SCC) under the tradename KAT. Preferably Candida lipolytica is inoculated into a three percent (%) TSB 1% Y medium and is grown aerobically for a period of time and at a temperature sufficient to yield a predetermined cell titre, generally between $10^6$-$10^9$ cells/milliliter (ml). A suitable temperature will range between 23-35°C. 30°C is preferred, at which temperature the first stage of development will require from about 16 to about 18 hours.

In the second stage of development of the lipase/protease-producing microorganism(s) for inoculation, an aliquot of the lipase/protease-producing microorganism(s), obtained at the end of the first stage is inoculated into a first starter development medium and is cultured aerobically. The starter development medium may be any substrate that will support the vigorous growth of the lipase/protease-producing microorganism(s) and the production of lipase or protease or both lipase and protease. Such substrates include whole milk, non-fat dry milk (NFDM) resuspended in water, fluid skim milk, whey, concentrated whey, or dried whey (such as Teklac®) (Formost) resuspended in water. The foregoing starter development substrates may be used singly or in any combination together. If NFDM is used, it is preferably resuspended in water to about 10% (wt/vol %). If concentrated whey or dried whey is used as the substrate, it is diluted or resuspended at a concentration of about 7% to about 15% (wt/vol %).

The inoculated first starter development medium is incubated at about 30°C for 12 hours or until cell titres reach from about $10^8$ to about $5 \times 10^8$ cells/ml. During the incubation period the pH rises from about 6.4 to about 7.0. During incubation of the first starter development medium, lipase, protease or lipase and protease activity is monitored. Lipase activity in a range of about 11 units (U)/ml to about 30 U/ml is desirable. Preferably the lipase activity will be between about 20 U/ml and 26 U/ml as determined by using Lipase Test Kit No. 800B, available from Sigma Biochemicals, St. Louis, Missouri.

Protease activity during the first starter development stage is monitored by spectrophototmetrically measuring the absorbance of soluble azure blue dye liberated by proteolysis of hide azure powder (Calbiochem Catalogue #37716) by an aliquot of the first starter development medium.

The lactic acid-producing microorganisms are separately cultured in a second starter development medium. The lactic acid producing microorganism(s) is(are) inoculated into any dairy-starter medium suitable for the vigorous growth of the lactic acid-producing microorganisms. Examples of such dairy starter media include a product sold under the name In-Sure® (Hansen's, Milwaukee, Wisconsin 53214), Funnel Grade (Miles Labs., Marschall Div., Wisconsin), MSM (Miles Labs., Marschall Div., Wisconsin), One-2-one (Miles Labs., Marschall Div., Wisconsin), T.S.S. (Dederich Corp., Germantown, Wisconsin), Phage Stat Complete (Pfizer, New York, New York) and Phase 4 (GallowayWest, Fond Du Lac, Wisconsin).

The lactic acid producing microorganisms are inoculated into the second starter development medium from slants and the medium is incubated for a sufficient period of time, generally between about 12 and 30 hours, at a sufficient temperature, generally in a range of between about 23° and about 35°C to bring the second starter development medium to a pH from about 5.3 to about 5.5. Preferably, the incubation proceeds for about 20 hours at 30°C at which time the cell titre for each of the lactic acid-producing microorganisms used will generally equal or exceed $10^8$ cells/ml. The duration of and temperature for the incubation of the second starter development medium can be varied as necessary so that the first starter development medium and second starter development medium are ready for transfer into the flavor development medium when needed.

Aliquots of the first and second starter development media that have incubated to the extent desired are transferred into a flavor development medium. In general, the transfer of the first starter development medium containing the lipase/protease-producing microorganism(s) will be in a range of from about 3% to about 20% (wt/vol) of the flavor development medium. An inoculum of the first starter development medium of about 10% (wt/vol) is preferred. In general, the transfer of the second starter development medium containing the lactic acid producing microorganisms

8

will be in a range of from about 0.5% to about 4% (wt/vol). An inoculum of the second starter development medium of about 1 to 2% (wt/vol) is preferred.

The flavor development medium may be simultaneously inoculated with transfers of both the first and second starter development cultures. In this case, the whole period of fermentation of the flavor development medium will involve mixed culture fermentation. Alternatively, the flavor development medium may be sequentially inoculated with transfers of the first and second starter cultures with a period of time between the two transfers. For example, the flavor development medium may be inoculated with a transfer of the first starter development medium containing C. lipolytica and, after a period of time, may be inoculated with a transfer of the second starter development medium containing the lactic acid-producing microorganisms without heat inactivation of the lipase/protease prior to addition of the lactic acid-producing microorganisms.

The flavor development medium may also be supplemented during the course of its fermentation. For example, a flavor development medium comprised of NFDM and $H_2O$ may be fermented for a period of time with the lipase/protease-producing microorganism. The flavor development medium is then innoculated with the lactic acid-producing microorganism and is supplemented with a source of protein, for example, NFDM or casein, and after a further period of time, butter. This flavor development medium is further fermented to the desired degree of completeness.

The flavor development medium may be comprised of skim milk, defined as milk having less than 2% milk fat, whole milk, non-fat dry milk, whey, whey protein concentrate, butter, cream or any other dairy product acceptable by the Food and Drug Administration Standards for the making of processed cheese food. Furthermore, if the cheese-flavored substance is to be used in imitation cheese vegetable oils (preferably those including fatty acids of 10 carbons inclusive or less, for example coconut oil, palm and and the like), casein and animal milk fats may be used.

The flavor development medium may have a fat content of from less than 2% to 50% on a weight/volume percent basis. The protein content will generally range from about 0.7% to about 3% (wt/vol) protein. Preferred is a flavor development medium comprising whole milk and butter.

The flavor development medium is fermented at a temperature and for a period of time sufficient to reduce the pH of the flavor development medium to about 5. If a temperature of 30°C is used the fermentation time will range between about 8 and about 24 hours depending on the amount of fat in the flavor development medium. Lower fermentation temperatures require concomitantly longer periods of time. If the flavor development medium has a relatively high butter fat content, the butyric acid concentration of the flavor development medium may be monitored instead of or along with pH. A butyric acid concentration reaching about 1% (wt/vol) is preferred.

When the proper pH or butyric acid concentration is reached, the fermentation process is terminated by heat inactivation at a temperature sufficiently high to inactivate any microganism(s), protease, lipase or all three. Generally, raising the temperature to about 85°C for about 45 minutes is sufficient. Alternatively, the above-mentioned microorganisms and enzymes may be inactivated by exposing the flavor development medium to very high temperatures exceeding 100°C for short periods of time.

A cheese-flavored substance is thus formed that may be spray dried, freeze-dried, concentrated, or kept in unconcentrated form. If spray dried, a solids content of about 95% is desirable. If concentrated, a paste consistency of from about 40% to about 60% solids is desirable. Such paste form of the cheese flavored substance may have a fat content range of from less than 2% to about 85%.

The spray dried product will have a fat content range of from less than 2% to about 55% of the solids and a protein content range of from about 1% to about 40% of the solids. In general, a protein content of from about 21% to about 38% and fat concentration of from less than about 2% to 40% is desirable in the spray dried product.

The cheese-flavored substance produced by the above-described process may be used as a cheese flavor in processed cheese foods, and processed cheese spreads or may be added to various foods including imitation cheese and cheese-flavored snack foods. The process for producing
the cheese-flavored substance and the cheese-flavored substance produced
thereby will be better understood from the following examples which are
intended by the inventor to be exemplary only and non-limiting.


### EXAMPLE I

An inoculum development medium of 500 ml of a 3% TSB, 1% Y
medium in a 6 liter (l) shake flask was inoculated with C. lypolitica ATCC
20324 washed from a TSB slant, and was incubated aerobically at 30°C with
agitation for approximately 30 hours. A 10% transfer of the C. lypotica
was inoculated into a BioFlo® fermentor (New Brunswick Scientific Company,
Edison, New Jersey) containing previously autoclaved first-starter development medium containing 49 grams (g) dried whey (Teklac®), 630 ml distilled water and 0.2 ml P2000 as an anti-foaming agent. This culture was
incubated aerobically with an air flow of about 0.7 volumes/minute (0.5 l)
for about 12 hours with agitation at 200 rpm. pH was maintained at 6.5
with 45% food grade acetic acid (HAC). Two flasks containing a second
starter development medium of 7% dairy starter medium (In-Sure®) were
inoculated with S. lactis C2 and L. casei TA 101 ATCC 39392 respectively
and were incubated at 30°C anaerobically for approximately 24 hours.


A flavor development medium was made up by supplementing about
700 g of the first starter development medium with a previously autoclaved
(30 min) mixture containing about 250 g of melted butter, 50 g rennet
casein and 150 g of NFDM in 500 ml of water. 30 ml each of S. lactis C2
and the L. casei TA101 that had been grown for about 48 hours in the
second starter development medium, was added. The flavor development
medium had a fat concentration of about 14% (44% of solids) at the start
of fermentation. The pH of the fermentation medium was maintained between
6 and 7 for the first hour of an approximately 8 hour anaerobic fermentation, after which the pH was allowed to fall. At the end of approximately
8 hours the flavor development medium was heated to about 80°C in a water
bath for about 90 minutes to inactivate the microorganisms and enzymes.
Following heat inactivation the heat inactivated flavor development medium
was held at approximately 25°C for 48 hours after which the sample was concentrated to about 60% solids by freeze drying. The product was designated F1A.

## EXAMPLE II

A second product, designated F2A was prepared in the same manner described in Example I hereinabove except that the flavor development medium was made up by supplementing the first starter development medium with a previously autoclaved (30 min) mixture containing about 250 g melted butter, and 300 g NFDM in 500 ml H$_2$O. 30 ml each of S. lactis C$_2$ and L. casei was added. The flavor development medium had a fat content of about 14% (36% of solids) at the start of fermentation. After heat inactivation and holding the flavor development medium for 48 hours at about 25°C, the heat inactivated flavor development medium was concentrated to about 50% solids by freeze drying.

## EXAMPLE III

A third product designated as F3A was prepared in the same manner described in Example I hereinabove except that the flavor development medium was made up by supplementing the first starter development medium with 1200 ml whole fresh milk (previously autoclaved for 17 min.), 70 g melted butter and 30 ml each of S. lactis and L. casei. The flavor development medium had an initial fat concentration of about 5% (38% of solids). After heat inactivation and holding for 48 hours at 25°C the sample was concentrated to about 35% solids by freeze drying. The product was designated F3A.

## EXAMPLE IV

An inoculum development medium containing 500 ml 3% TSB and 1% Y in a 6 liter flask was inoculated with C. lipolytica 20324 washed from a TSB slant and was incubated aerobically at 30°C with agitation. After about 16 hours, a second inoculum of C. lipolytica 20324 was washed into the inoculum development medium and incubation was resumed for an additional 12 hours. An approximate 10% transfer comprising about 150 ml of the incubated inoculum development medium was inoculated into a first starter development medium of 1000 ml of sterile 10% NFDM and 0.2 ml P 2000 in a BioFlo® fermentor. The first starter development medium was incubated with agitation aerobically for approximately 16 hours.

Two flasks of a second starter development medium comprising about 30 ml 7% In-Sure® were inoculated from slants of S. lactis C2 and L. casei TA 101, respectively and incubated at 30°C for approximately 19 hours anaerobically.

A flavor development medium was made up by inoculating 1500 g of whole milk (autoclaved for 30 min) with about 150 ml of the first starter development medium containing C. lipolytica and about 20 ml each of the second starter development medium containing S. lactis C2 and L. casei. The flavor development medium had an initial fat content of about 3.5%.

The flavor development medium was incubated anaerobically for approximately 12 hours to a pH of about 5.44 at which time the flavor development medium was nuetralized to pH 7.0 (NaOH) and heated to about 80°C for approximately 170 minutes, and thereafter was cooled. The product was concentrated to about 10% moisture by freeze drying. The product was designated F1B.

## EXAMPLE V

A product designated F2B was prepared by the same method described in Example IV except that the flavor development medium also contained 50 g of butter. The flavor development medium had an initial fat content of about 6%. The pH of the flavor development medium reached about 5.40 after about 12 hours of anaerobic fermentation. The fermentation was neutralized, halted by heat inactivation and concentrated as described in Example IV hereinabove.

## EXAMPLE VI

A product designated F3B was prepared by the method described in Example IV hereinabove except that the whole milk of the flavor development medium was replaced with 1500 g of fluid skim milk. The initial fat content of the flavor development medium was less than 0.5%. The pH of the flavor development medium reached about 5.21 after about 12 hours of anerobic fermentation. The fermention was neutralized, halted by heat inactivation and concentrated as described in Example IV hereinabove.

## EXAMPLE VII

A fermentation product designated F4B was prepared by the following method. 150 ml of the first starter development medium obtained at the end of the 16 hour incubation period described in Example IV hereinabove was supplemented with a previously autoclaved (30 min) mixture containing about 750 g whole milk and 750 g skim milk, and about 20 ml of each of the second starter development medium containing S. lactis $C_2$ and L. casei TA 101. The initial fat content of the flavor development medium was about 1.75%. After 12 hours of anaerobic fermentation a pH of 5.52 was reached. The fermentation was nuetralized, halted by heat inactivation and concentrated as described in Example IV.

## EXAMPLE VIII

Four fermentation products designated F1C, F2C, F3C and F4C were prepared by the following method. An inoculation medium of 200 ml 3% TSB, 1% Y was inoculated with C. lipolytica 20324 washed from a TSB slant and was incubated aerobically for approximately 18 hours at 30°C with agitation. A first starter development medium of 1000 ml skim milk and 0.3 ml P 2000 in a BioFlo® fermentator was autoclaved for 30 minutes, cooled to 30°C and inoculated with an approximately 20 ml transfer of the inoculation medium at pH 6.5 and was incubated aerobically with agitation at 30°C for about 12 hours. The pH was controlled at 6.5 with 45% HAC food grade acetic acid.

A second starter development medium of 7% In-Sure® was inoculated with S. lactis $C_2$ and L. casei TA 101 and incubated for 24 hours at 30°C.

Four fermenters were prepared with various flavor development media as follows:

F1C — 1500 ml skim milk

F2C — 1500 ml skim milk and 112 g NFDM

F3C — 1500 ml skim milk and 112 g Alacen® 855 (a whey protein concentrate, supplied by New Zealand Milk Products, Inc., Petaluma, California)

F4C — 800 ml skim milk, 800 ml $H_2O$, 120 g Alacen® 55 and 120 g Teklac

Each of the flavor development media had fat contents of less than 0.5% on fluid bases and less than 2% on solids bases. Each of the flavor

development media was autoclaved for 30 minutes and then placed in a cold room at about 4°C overnight. F3C and F4C congealed and 200 ml skim milk was added to each to fluidize the gelled mass.

Each fermenter containing the above-described flavor development media was inoculated with about 150 ml of the first starter development medium that had incubated for about 12 hours. The flavor development media were cultured anaerobically at 30°C with agitation at 500 rpm for 4 hours at which time the second starter development media containing S. lactis and L. casei were inoculated with a 1% transfer. pH was monitored and after about 8 hours the flavor development media reached a pH between 5.2 and 5.5. The flavor development media were then heated to 80°C for about 90 minutes. After cold storage overnight at 4°C, each of the flavor development media was divided into two portions. The first portion was freeze dried. Butter was added to the second portion to a protein fat ratio of 1:2 and then freeze dried.

## EXAMPLE IX

Three fermentation products designated F1D, F2D and F3D were prepared by the following method. An inoculation medium of 500 ml 3% TSB and 1% Y was inoculated with C. lipolytica ATCC 20324 and was incubated aerobically for approximately 24 hours at 30°C with agitation. Two aliquots of a starter development medium comprising 150 ml of 7% Cul-Sure® (SCC, Clawson, MI) that had been previously autoclaved were inoculated, one with S. lactis and the other with L. casei. The starter development media were incubated aerobically for approximately 24 hours at 30°C.

Three BioFlo® fermentors were prepared with various flavor development media as follows:

F1D - 150 g NFDM and $H_2O$ to 1350 ml

F2D - 100 g NFDM and $H_2O$ to 900 ml

F3D - 60 g NFDM and $H_2O$ 540 ml

A 10% transfer of the previously grown Candida lipolytica inoculation culture was made to each fermenter so that the final volumes were 1500 ml, 1000 ml and 600 ml for F1D, F2D and F3D respectively.

The flavor development media were cultured at 31°C at 200 rpm and aerated at 0.7 volumes of air/volume culture/min. The pH of F2D was held at a pH of about 6 for the first 10 hours of this period, and thereafter at about pH 6.5. F1D and F3D were held at 6.5 through this period. After approximately 11.5 hours aeration was stopped and 30 ml of each of the previously cultured S. lactis and L. casei cultures were added to each fermentor. F2D was further supplemented with 66 g casein and 265 ml $H_2O$ F3D was further supplemented with 60 g NFDM and 540 g $H_2O$. The flavor development media were further cultured anaerobically for approximately 3 hours. 124 g, 250 g, and 125 g of butter were then added to F1D, F2D and F3D respectively. The cultures were incubated anaerobically for an additional 5 hours at which time they were heat inactivated in a water bath for 90 minutes at 85-90°C.

The product was concentrated to a paste by freeze drying.

## EXAMPLE X

Fermentation products F1A, F2A, F3A, F1D, F2D and F3D were evaluated for taste in a preparation of unflavored processed cheese. Each of the fermentation products was blended into an unflavored cheese spread loaf containing no aged cheese. The fermentation products were added at a weight to weight ratio of 3%. Cheese spreads containing F2A, F3A, F2D and F3D prepared in this manner were reported to have a clean cheesy flavor with either no whey flavor or slight whey flavor. Cheese spreads containing F1A and F1D were reported to have cheesey flavor and an additional either slightly fermented or slightly unclean flavor.

## EXAMPLE XI

Fermentation products F1B, F2B, F3B, and F4B were evaluated for taste. The freeze dried samples were reconstituted with water to a paste of 40% solids.

The paste was blended into an unflavored process cheese spread loaf formulation having no aged cheese. The paste constituted 2.5% (wt/wt) of the final cheese spread loaf formultion. The cheese formulations were all reported to have a distinct cheese flavor, with additional flavor notes characterized as either buttery flavored, lypolytic type cheese flavored and/or sour.

WHAT IS CLAIMED IS:

1. The method of producing a cheese-flavored substance comprising the steps of:

(a) providing a flavor development medium;

(b) incubating said flavor development medium with a source of lipase/protease and at least one lactic acid-producing microorganism; and

(c) inactivating said microorganism and lipase/protease.

2. The method of Claim 1 wherein said source of lipase/protease is at least one microorganism producing at least one enzyme selected from the group consisting of lipase and protease.

3. The method of Claim 2 wherein said microorganism is selected from the genus Candida.

4. The method of Claim 3 wherein said Candida is Candida lipolytica ATCC 20324.

5. The method of Claim 1 wherein said source of lipase and protease is prepared lipase and protease.

6. The method of Claim 1 wherein said at least one lactic acid-producing microorganism is a dairy strain of microorganism.

7. The method of Claim 6 wherein said dairy strain of microorganism is selected from the group of genuses consisting of Streptococcus, Lactobacillus, Leuconostoc, Micrococcus, Cirobacter and Brevibacterium.

8. The method of Claim 7 wherein said Streptococcus is selected from the group consisting of S. cremoris, S. lactis, S. thermophilous, and S. diacetilactis.

9. The method of Claim 7 wherein said Lactobacillus is selected from the group consisting of L. casei, L. bulgaricus, L. acidophilous, L. delbrueckii, L. helveticus.

10. The method of Claim 7 wherein said Leuconostoc is selected from the group consisting of Le. cremoris, Le. dextranicum and Le. citrovorum.

11. The method of Claim 7 wherein said Micrococcus is selected from the group consisting of M. caselytics, M. conglomeratus and M. freudenreichii.

12. The method of Claim 7 wherein said Citrobacter is selected from the group consisting of C. intermedii, C. freudenii.

13. The method of Claim 1 wherein said at least one lactic acid-producing strain of microorganism comprises two lactic acid-producing microorganisms.

14. The method of Claim 13 wherein said two lactic acid-producing microorganisms are selected from the genuses consisting of Streptococcus, Lactobacillus, Leuconostoc, Micrococcus and Brevibacterium.

15. The method of Claim 14 wherein said Streptococcus is selected from the group consisting of S. cremoris, S. lactis, S. thermophilous, and S. diacetilactis.

16. The method of Claim 14 wherein said Lactobacillus is selected from the group consisting of L. casei, L. bulgaricus, L. acidophilous, L. delbrueckii, L. helveticus.

17. The method of Claim 14 wherein said Leuconostoc is selected from the group consisting of L. cremoris, L. dextranicum and L. citrovorum.

18. The method of Claim 14 wherein said Micrococcus is selected from the group consisting of M. caselytics, M. conglomeratus and M. freudenreichii.

19. The method of Claim 14 wherein said Citrobacter consisting of C. intermedii, C. freudenii.

20. The method of Claim 14 wherein said two lactic acid-producing organisms are Lactobacillus casei and Streptococcus lactis C2.

21. The method of Claim 1 wherein said flavor development medium comprises at least one substance selected from the group consisting of skim milk, whole milk, non-fat dry milk, whey, whey protein concentrate, dried whey, butter, cream and milk fat.

22. The method of Claim 21 wherein said flavor development medium comprises at least one substance selected from the group further consisting of vegetable oils including fatty acids of 10 carbon atoms inclusive or less, animal milk, animal milk fat and casein.

23. The method of Claim 1 wherein said incubating step is carried out until the pH of said flavor development medium reaches from about 4.5 to about 5.5.

24. The method of Claim 23 wherein said pH is about 5.

25. The method of Claim 1 wherein the duration of said incubating step is about 6 to about 24 hours.

26. The method of Claim 1 wherein the duration of said incubating step is about 8 to about 12 hours.

27. The method of Claim 1 further including after the step of incubating, the step of concentrating the incubated flavor development medium.

28. The method of Claim 27 wherein said incubated flavor development medium is concentrated to a solids range of from 30-95% solids wt./wt. %.

29. The method of Claim 27 wherein said incubated flavor development medium is concentrated to a paste with a solids range from about 40 to about 60% wt./wt.

30. The method of Claim 27 wherein said incubated flavor development medium is concentrated to a solids content of about 95% solids wt./wt.

31. The method of Claim 27 wherein said concentrating step is spray drying.

32. The method of Cliam 27 wherein said concentrating step is performed after said inactivating step.

33. The method of Claim 27 wherein said concentrating step is performed before said inactivating step.

34. The method of Claim 27 wherein said concentrating step is performed simultaneously with said inactivating step.

35. The method of Claim 1 wherein said flavor development medium comprises fats in a range of from less than about 0.5% (wt/vol) to about 50% (wt/vol) and protein in a range of from about 0.3% (wt/vol) to about 12% (wt/vol).

36. The method of Claim 1 wherein said flavor development medium comprises less than about 2% fat and about 5% protein.

37. The method of Claim 1 wherein said flavor development medium comprises about 0.3% protein and about 50% fat.

38. The method of Claim 1 wherein said flavor development medium comprises about 3% protein and about 6.5% fat.

39. A method for producing a cheese-flavored substance comprising:

(a) providing a flavor development medium comprising at least one substance selected from the group consisting of skim milk, whole milk, nonfat dry milk, whey, whey protein concentrate, dried whey, butter, cream, and milk fat;

(b) incubating said flavor development medium with a microorganism producing at least one enzyme selected from the group consisting of lipases and proteases, and at least one lactic acid-producing micro-organism for a period sufficient to produce a pH in a range of between about 4.5 and 5.5; and

(c) inactivating said microorganism(s), protease and lipase.

40. The method of Claim 39 wherein said microorganism-producing at least one extracellular enzyme is from the genus Candida.

41. The method of Claim 40 wherein said at least one lactic acid-producing microorganism is selected from the group of the genus consisting of Streptococcus, Lactobacillus, Leuconostoc, Micrococcus, Cirobacter and Brevibacteirum.

42. The method of Claim 40 wherein said at least one lactic acid producing organism comprises Streptococcus lactis $C_2$ and Lactobacillus casei.

43. The method of Claim 42 wherein said flavor development medium comprises whole milk.

44. The method of Claim 42 wherein said flavor development medium comprises skim milk.

45. The method of Claim 42 wherein said flavor development medium comprises whey.

46. The method of Claim 42 wherein said flavor development medium comprises whey concentrate.

47. The method of Claim 42 wherein said flavor development medium comprises nonfat dry milk.

48. The method of Claim 42 wherein said flavor development medium comprises butter.

49.  The method of Claim 42 wherein said flavor development medium comprises cream.

50.  The method of Claim 1 wherein said source of lipase/proteae is a purified or partially purified preparation of lipase/protease and a lipase/protease-producing microorganism.

51.  A cheese flavored substance produced by the method of Claim 1.

52.  A cheese flavored substance produced by the method of Claim 1 further including butter fat added thereto.

53.  A cheese flavored substance produced by the method of Claim 2.

54.  A cheese flavored substance produced by the method of Claim 2 further including butter fat added thereto.

55.  A cheese flavored food product comprising the cheese flavored substance of Claim 51 and processed cheese, processed cheese food processed cheese spread or other non-cheese type foods.

56.  A cheese flavored food product comprising the cheese flavored substance of Claim 53 and processed cheese, processed cheese food, processed cheese spread or other non-cheese type food.

**European Patent Office**

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A-1 449 279 (L. GIVAUDAN & CIE.)<br><br>* Page 4, example 1, claim 1 * | 1,13, 14,21, 22,25, 27,31, 39,51, 55 | A 23 L 1/23<br>A 23 C 19/032<br>A 23 C 19/06<br>A 23 C 19/068 |
| X | US-A-4 172 900 (J.G. DOOLEY)<br><br>* Claims 1,7,11 * | 1,21, 22,39 | |
| X | US-A-4 133 895 (F.V. KOSIKOWSKI et al.)<br><br>* Claims 1-4 * | 1,21, 22,39, 51 | |
| X | FR-A-2 368 224 (INSTYTUT PRZEMYSLU MLECZARSKIEGO)<br>* Page 1, line 34 - page 2, line 10, pages 4, lines 24-26, claims 1,2 * | 1,6-9, 21-25 | TECHNICAL FIELDS SEARCHED (Int. Cl.4)<br><br>A 23 L 1/00<br>A 23 C 19/00 |
| A | DE-A-2 205 980 (BEATRICE FOODS CO.)<br>* Claims 1-11 * | | |
| A | DE-A-2 020 540 (BEATRICE FOODS CO.)<br>* Claims 1-6 * | | |

The present search report has been drawn up for all claims

| Place of search<br>BERLIN | Date of completion of the search<br>23-11-1984 | Examiner<br>SCHULTZE D |
|---|---|---|